(19) Europäisches Patentamt
European Patent Office
Office européen des brevets

(11) **EP 4 749 089 A1**

(12) **EUROPEAN PATENT APPLICATION**

(43) Date of publication:
**27.05.2026 Bulletin 2026/22**

(21) Application number: **25218848.7**

(22) Date of filing: **26.11.2025**

(51) International Patent Classification (IPC):
**F01D 5/18** (2006.01)　　　**F01D 9/04** (2006.01)

(52) Cooperative Patent Classification (CPC):
**F01D 9/041; F01D 5/186;** F05D 2260/202

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.11.2024 US 202463725184 P**

(71) Applicant: **General Electric Company Evendale, Ohio 45215 (US)**

(72) Inventors:
- **BUELL, Kira**
  **Evendale, 45215 (US)**
- **ERDMAN, Jeffrey**
  **Evendale, 45215 (US)**
- **GRIFFIN, Robert**
  **Evendale, 45215 (US)**
- **MYERS, Marie**
  **Evendale, 45215 (US)**

(74) Representative: **Openshaw & Co.**
**8 Castle Street**
**Farnham, Surrey GU9 7HR (GB)**

(54) **GAS TURBINE ENGINE NOZZLE**

(57)　　Gas turbine engine (10) nozzle and associated airfoil (123) designs are disclosed. An airfoil (123) of an engine nozzle segment (140, 800) includes: a convex panel (920, 1120); a concave panel (1020); an outer band (930, 1030, 1130); and an inner band (940, 1040, 1140). The convex panel (920, 1120) includes a plurality of metering holes (910, 1010, 1110), the airfoil (123) characterized by the following equation, in which a convex panel (920, 1120) metering hole area (1230) (CVXA (860, 980)), inner band (940, 1040, 1140) radius (IBR), and loading area (840, 1090) (LA) are related as follows:

$$EQ1 = \left[ \frac{\left( \frac{CVXA(m^2)}{0.000005\ m^2} + 0.000005 \right)}{\left( \frac{IBR\ (m)}{\pi\ (m)} \right) \left( \frac{LA\ (m^2)}{0.00001 m^2} \right)} \right],$$

wherein 0.0000001 meters squared ($m^2$) $\leq$ CVXA $\leq$ 0.000004 $m^2$, 0.213 m $\leq$ IBR $\leq$ 0.221 m, 0.0000147 $m^2 \leq$ LA $\leq$ 0.0000153 $m^2$, and 4.835 $\leq$ Equation 1 $\leq$ 281.150.

**Description**

PRIORITY INFORMATION

The present application claims priority to U.S. Provisional Patent Application Number 63/725,184, filed on November 26, 2024. U.S. Provisional Patent Application Number 63/725,184 is hereby incorporated by reference in its entirety for all purposes.

FIELD

The present disclosure relates to a gas turbine engine nozzle.

BACKGROUND

A gas turbine engine generally includes a turbomachine and a rotor assembly. Gas turbine engines, such as turbofan engines, may be used for aircraft propulsion. In the case of a turbofan engine, the rotor assembly may be configured as a fan assembly with a core turbine engine that includes a compressor section, combustion section, and turbine section. A nozzle can be positioned between the combustion section and the turbine section to direct hot gas from the combustion section into the turbine section.

BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:

FIG. 1 is a schematic, cross-sectional view of a gas turbine engine in accordance with example aspects of the present disclosure;

FIG. 2 is a close-up, side view of a portion of a turbine section of the gas turbine engine of FIG. 1;

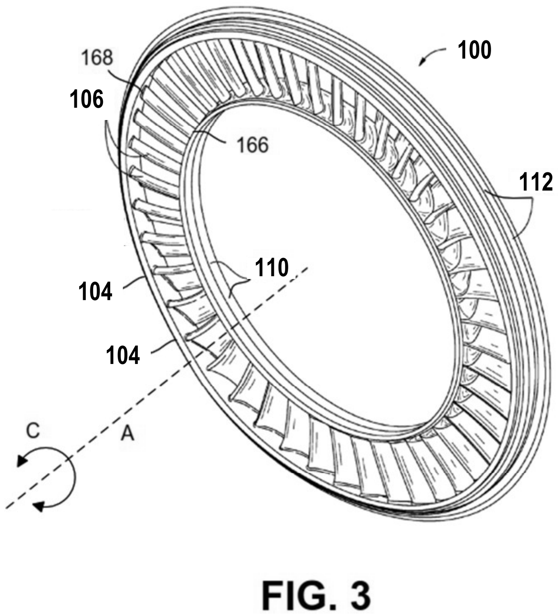

FIG. 3 is a perspective view of a turbine nozzle of the gas turbine engine of FIG. 1;

FIG. 4 is a side elevation view of an example nozzle vane of the gas turbine engine of FIG. 1;

FIG. 5 is a rear perspective view of the example nozzle segment of the gas turbine engine of FIG. 1;

FIG. 6A illustrates a cross-section of an example metering hole;

FIG. 6B illustrates a cross-section of an example metering hole;

FIG. 7A is a perspective view of a baffle insert for the example nozzle vane of FIG. 4;

FIG. 7B is a side elevation view of the baffle insert of FIG. 7A;

FIG. 7C is a view of the baffle insert of FIGS. 7A-7B in the nozzle vane of FIG. 4;

FIG. 8A shows an example nozzle segment;

FIG. 8B shows an example nozzle segment;

FIG. 8C shows an example inner band radius;

FIG. 8D shows an example loading area of a nozzle airfoil;

FIG. 9 is an example convex panel of a nozzle airfoil;

FIG. 10 is an example concave panel of a nozzle airfoil;

FIG. 11 is an example nozzle airfoil; and

FIG. 12 is an example inner band of a nozzle.

Elements in the figures are illustrated for simplicity and clarity and have not necessarily been drawn to scale. For example, the dimensions and/or relative positioning of some of the elements in the figures may be exaggerated relative to other elements to help to improve understanding of variations of the present disclosure. Also, common but well-understood elements that are useful or necessary in a commercially feasible embodiment are often not depicted in order to facilitate a less obstructed view of these variations of the present disclosure. Certain actions and/or steps may be described or depicted in a particular order of occurrence while those skilled in the art will understand that such specificity with respect to sequence is not actually required.

DETAILED DESCRIPTION

Reference will now be made in detail to certain examples of the present disclosure, one or more examples of which are illustrated in the accompanying drawings. The detailed description uses numerical and letter designations to refer to features in the drawings. Like or similar designations in the drawings and description have been used to refer to like or similar parts of the disclosure.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation.

As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In some examples used herein, the term "substantially" is used to describe a relationship between two parts that is within three degrees of the stated relationship (e.g., a substantially colinear relationship is within three degrees of being linear, a substantially perpendicular relationship is within three degrees of being perpendicular, a substantially same relationship is within three degrees of being the same, a substantially flush relationship is within three degrees of being flush, etc.).

As used herein, the terms "upstream" and "downstream" refer to locations along a fluid flow path relative to a direction of fluid flow from a first location to a second location. For example, with respect to a fluid flow, "upstream" refers to the first location from which the fluid flows, and "downstream" refers to the second location toward which the fluid flows. For example, with regard to a gas turbine engine, a compressor is said to be upstream of a turbine relative to a flow direction of air flowing through the engine.

Various terms are used herein to describe the orientation of features. In general, the attached figures are annotated with reference to the axial direction, radial direction, and circumferential direction of the vehicle associated with the features, forces, and moments. In general, the attached figures are annotated with a set of axes including the axial axis A, the radial axis R, and the circumferential axis C. As used herein, the terms "axial" and/or "axially" refer to a relative position and/or direction of objects along axis A, which is substantially parallel to an axis of rotation of the gas turbine engine. As used herein, the terms "radial" and/or "radially" refer to a relative position and/or direction of objects along the axis R, which is substantially perpendicular with axis A and intersects axis A at only one location. Additionally, the terms of "circumferential" and/or "circumferentially" refer to the relative position and/or direction of objects along a circumference that surrounds axis A but does not intersect the axis A at any location. Further, the terms "leading edge" and/or "pressure side" refer to components and/or surfaces that are oriented upstream relative to fluid flow of the system, and the terms "trailing edge" and/or "suction side" refer to components and/or surfaces that are oriented downstream relative to the fluid flow of the system.

The term "exhaust gas temperature" (EGT) refers to a gas temperature in a turbine engine. As used herein, EGT is a "redline exhaust gas temperature," which refers to a maximum permitted takeoff temperature documented in a Federal Aviation Administration (FAA)-type certificate data sheet. In certain examples, the term redline EGT refers to a maximum takeoff temperature of an airflow after a first stage stator downstream of an HP turbine of an engine that the engine is rated to withstand. The term redline exhaust temperature EGT is sometimes also referred to as an indicated turbine exhaust gas temperature or indicated turbine temperature.

The term "core speed" (N) refers to a rotational speed at which the high pressure compressor (HP compressor) and the HP turbine rotate about a rotational axis. The HP turbine and the HP compressor are rotationally connected. As used herein, N is a "redline core speed," which refers to a maximum rotational speed of the turbine engine permitted at takeoff as documented in the FAA-type certificate data sheet. For example, the redline core speed is the rate at which the drive shaft for the turbine engine rotates, which defines the rotational speed of a particular blade within the engine.

A "radius of an inner band" or "inner band radius" (IBR) is a measure of the inner band radius with respect to a centerline of the stage one nozzle (S1N). A segment of the S1N has an inner band and an outer band. Vanes or other airfoils of the S1N are positioned between the inner band and the outer band, and adjacent segments of the S1N form an opening or aperture though which hot gas from the combustor can flow. The inner band and the outer band define inner and outer radial boundaries, respectively, of the gas flow through the S1N.

A "loading area" is a protrusion from one airfoil to interlock or otherwise connect with another airfoil. The loading area can be calculated as a length times a width ($L$ x $W$) of the upper surface of the protrusion.

A "convex panel percent span" (CVX%) represents a location on the convex panel span corresponding to a percentage of the span or distance around an airfoil from a trailing edge (TE) of the concave pressure side (PS) (indicating a starting point or 0% of the span around the airfoil) to the TE of the convex suction side (SS) of the panel/airfoil (indicating an end point or 100% of the span around the airfoil). The TE is a point of maximum curvature (minimum radius) at a rear or aft end of the airfoil. The LE is a point of maximum curvature (minimum radius) at a front or fore end of the airfoil. The airfoil has a convex side (curved inward) and a concave side (curved outward). The airfoil has a suction side (SS), which is typically the convex side, and a pressure side (PS), which is typically the concave side, to draw in and guide airflow. A reference plane can be formed by a span line extending around the airfoil from PS TE to SS TE. The span line is measured at a throat of the airfoil. The throat is a minimum width or distance between the TE of a first airfoil and a nearest point on a surface of a second, adjacent airfoil facing the first airfoil, measured as the first airfoil and the second airfoil would be aligned to form a nozzle segment when mounted together in an installed condition. As described herein, the CVX% aft of the throat defines an area of the convex panel for metering hole positioning.

The CVX% is calculated by measuring a total curve length around a middle of the airfoil (as defined by the throat), starting at 0 from the PS TE edge and ending at the SS TE. This curve length distance is then ratioed to 1, and measurements are taken as a percent of this value to determine CVX% (e.g., 66.7% to 98% span). The length or location along the span of the area of interest can be obtained as follows:

% Span*(total airfoil distance) = (length of specified area on the convex side of the airfoil). As such, the CVX% can be set at 66.7% to 98% of the total airfoil span from PS TE around to SS TE.

The term "convex panel metering hole area" (CVXA) refers to an area of metering holes (the metering hole is also referred to herein as a cooling hole or cooling aperture) positioned in the CVX% on the convex side of the airfoil (e.g., at 66.7-98% span). The metering hole or metering aperture is an opening through which a cooling fluid, such as cooling air, flows to form a boundary layer or film along the outer surface of the airfoil. The boundary layer or film helps protect the airfoil from the heated air and/or exhaust gas from the combustor that passes over and is directed by the airfoil. As used herein, the CVXA relates to an area of metering holes on the convex side of a panel or airfoil that is defined aft of the throat of the airfoil. An area of the metering holes is determined based on a diameter of the metering hole (measured at the outer surface of the metering hole) and a number of holes on the convex panel or side of the airfoil. As described herein, the CVXA metering area determines how much air flow exits the convex panel aft of the throat.

The CVXA for the convex panel of the airfoil is calculated as a sum of the areas of the metering holes in the CVX%. The holes can vary in shape including circular, elliptical, rectangular, irregular, etc. As such, a diameter of a hole can vary including through a depth of the hole through the airfoil surface from inlet to outlet but is measured at the minimum diameter for purposes herein. Hole area can be calculated based on diameter (for round hole shapes), hydraulic diameter (for non-round hole shapes). The sum of the individual hole areas can then be determined to define the CVXA for holes in the CVX%.

An "inner band flow area" (IBFA) represents an area of air flow across the inner band of an airfoil in the convex panel span as defined above. IBFA is an amount of cooling air required to cool the portion of the airfoil. The inner band flow area is an area of the inner band including metering holes to generate cooling flow to cool the airfoil. While the inner band typically does not include flow area in the convex region, certain examples add a flow area to the convex inner band.

The term "baffle insert hole area" (BA) refers to an area of metering holes in a baffle insert. A baffle insert (also referred to as an impingement baffle herein) can be provided in an internal cavity of an airfoil. The baffle insert includes cooling or metering holes to guide cooling air through the airfoil (e.g., a vane of the S1N). The BA can be determined for the baffle insert based on a diameter of the metering hole and a number of holes in the baffle insert. The BA is used to maintain a minimum back flow margin with added metering holes.

The BA for the baffle insert of the airfoil is calculated as a sum of the areas of the metering holes on the baffle insert. The holes can vary in shape including circular, elliptical, irregular, etc. As such, a diameter of a hole (measured at the minimum or metering location of the hole) can vary including through a depth of the hole through the airfoil surface from inlet to outlet but is measured at the smallest size of the hole for purposes herein. Hole area can be calculated based on diameter (for round hole shapes), hydraulic diameter (for non-round hole shapes). The sum of the individual hole areas can then be determined to define the BA for holes in the baffle insert.

The term "concave percent span" (CCA%) represents a location on the concave panel span corresponding to a percentage of the span or distance around an airfoil from a trailing edge (TE) of the concave pressure side (PS) (0%) to the TE of the convex suction side (SS) (100%) of the panel/airfoil. The CCA% controls the area for metering hole positioning on the concave side of the airfoil.

The CCA% is calculated by measuring a total curve length around a middle of the airfoil, starting at 0 from the concave PS TE edge and ending at the convex SS TE. This curve length distance is then ratioed to 1, and measurements are taken as a percent of this value to determine CCA% (e.g., 7.5% to 33.4% span). The length or location along the span of the area of interest can be obtained as follows:

% Span*(total airfoil distance) = (length of specified area on the concave side of the airfoil). As such, the CCA% can be set at 7.5% to 33.4% of the total airfoil span from PS TE around to SS TE.

The term "concave hole metering area" (CCVA) refers to an area of metering holes found in a portion of the airfoil defined by CCA% on the concave side of the airfoil. The CCVA is determined based on a diameter of the metering hole (as measured as the smallest diameter through the hole shape) and a number of holes in the CCA%. The CCVA is used to determine metering holes to be removed from the concave panel of the airfoil to compensate for added flow on the convex side of the airfoil while maintaining a bulk temperature on the concave panel.

The CCVA for the concave panel of the airfoil is calculated as a sum of the areas of the metering holes in the CCA%. The holes can vary in shape including circular, elliptical, irregular, etc. As such, a diameter of a hole can vary including through a depth of the hole through the airfoil surface from inlet to outlet but is measured at the metering portion, or smallest diameter of the hole for purposes herein. Hole area can be calculated based on diameter (for round hole shapes), hydraulic diameter (for non-round hole shapes). The sum of the individual hole areas can then be determined to define the CCVA for holes in the CCA%.

An area of maximum curvature, "MC", of an airfoil corresponds to a pre-throat area or location on a suction or convex side of an airfoil, also referred to as an area of maximum curvature on the airfoil. The term "MC percent span" (MC%) represents a percentage of the span around the base of the airfoil near the inner band segment. The MC% controls the area which has received a cooling flow volume. The MC% is calculated by measuring a total curve length around a lower portion of the airfoil, starting at 0 from the concave PS TE edge and ending at the convex SS TE. This curve length distance is then ratioed to 1, and measurements are taken as a percent of this value to determine MC% (e.g., 54.4% to 62% span). The length or location along the span of the area of interest can be obtained as follows:

% Span*(total airfoil distance) = (length of specified area on a side of the airfoil). As such, the MC% can be set at 54.4% to 62% of the total airfoil span from PS TE around to SS TE on the lower portion of the airfoil.

The term "MC metering hole area" (MCA) refers to an area of metering holes found in a portion of the airfoil defined by the MC%. The MCA is determined based on a diameter of the metering hole and a number of holes in the MC%. The MCA for the convex panel of the airfoil is calculated as a sum of the areas of the metering holes in the MC%. The holes can vary in shape including circular, elliptical, irregular, etc. As such, a diameter of a hole can vary including through a depth of the hole through the airfoil surface from inlet to outlet but is measured at minimum hole size for purposes herein. Hole area can be calculated based on diameter (for round hole shapes), hydraulic diameter (for non-round hole shapes). The sum of the individual hole areas can then be determined to define the MCA for holes in the MC%.

All measurements referred to herein are taken of the blade assembly prior to use or as a cold component.

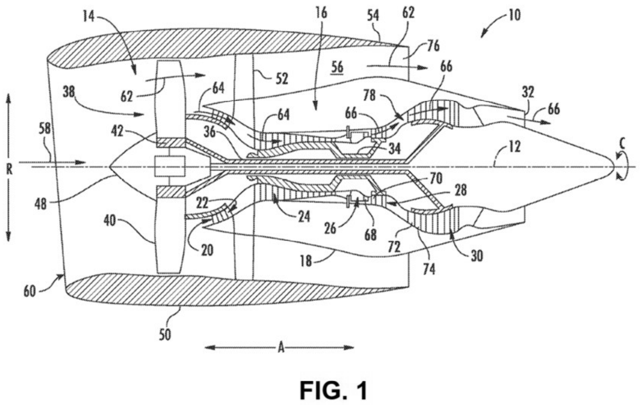

Referring now to the drawings, FIG. 1 provides a schematic cross-sectional view of a turbine engine 10, which may be a gas turbine engine, in accordance with an example implementation of the present disclosure. As shown in FIG. 1, the turbine engine 10 defines an axial direction A (extending parallel to a longitudinal or axial centerline 12 provided for reference) and a radial direction R. A circumferential direction C extends three hundred sixty degrees (360°) around the axial centerline 12.

The turbine engine 10 includes a fan section 14 and a core turbine engine 16 disposed downstream of the fan section 14. The exemplary core turbine engine 16 depicted generally includes a substantially tubular outer casing 18 that defines an annular core inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and an exhaust nozzle section 32.

A high pressure (HP) shaft or spool 34 drivingly connects the HP turbine 28 to the HP compressor 24. A low pressure (LP) shaft or spool 36 drivingly connects the LP turbine 30 to the LP compressor 22. In other examples of turbine engine 10, additional spools may be provided.

The fan section 14 includes a fan 38 having a plurality of fan blades 40 coupled to a disk 42 in a spaced apart manner. As depicted, fan blades 40 extend outward from disk 42 generally along the radial direction R. The fan blades 40 and disk 42 are together rotatable about the longitudinal axis 12 by the LP shaft 36. In some examples, a power gear box having a plurality of gears can be included for stepping down the rotational speed of the LP shaft 36 to a more efficient rotational fan speed.

Referring still to the example of FIG. 1, disk 42 is covered by rotatable spinner 48. The rotatable spinner 48 is aerodynamically contoured to promote an airflow through the plurality of fan blades 40.

The example fan section 14 includes an annular fan casing or outer nacelle 50 that circumferentially surrounds the fan 38 and/or at least a portion of the core turbine engine 16. The nacelle 50 is supported relative to the core turbine engine 16 by a plurality of circumferentially-spaced outlet guide vanes 52. Moreover, a downstream section 54 of the nacelle 50 can extend over an outer portion of the core turbine engine 16 so as to define a bypass airflow passage 56 therebetween as shown in FIG. 1.

During operation of the turbine engine 10, a volume of air 58 enters turbine engine 10 through an associated inlet 60 of the nacelle 50 and/or fan section 14. As the volume of air 58 passes across fan blades 40, a first portion of the air 58 (as indicated by arrows 62) is directed or routed into the bypass airflow passage 56 and a second portion of the air 58 (as indicated by arrows 64) is directed or routed into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 and HP turbine rotor blades 70 that are coupled to the HP shaft or spool 34. The energy that is extracted causes the HP shaft or spool 34 to rotate and supports operation of the HP compressor 24.

The combustion gases 66 are then routed through the LP turbine 30 where a second portion of thermal and kinetic energy is extracted from the combustion gases 66 via sequential stages of LP turbine stator vanes 72 and LP turbine rotor blades 74 that are coupled to the LP shaft or spool 36. The energy that is extracted causes the LP shaft or spool 36 to rotate and supports operation of the LP compressor 22 and/or rotation of the fan 38.

The combustion gases 66 are subsequently routed through the exhaust nozzle section 32 of the core turbine engine 16 to provide propulsive thrust. The HP turbine 28, the LP turbine 30, and the exhaust nozzle section 32 at least partially define a hot gas path 78 for routing the combustion gases 66 through the core turbine engine 16.

Simultaneously, the pressure of the first portion of air 62 is substantially increased and also provides propulsive thrust. The pressure of the first portion of air 62 is increased as it is routed through the bypass airflow passage 56 before it is exhausted from a fan nozzle exhaust section 76 of the turbine engine 10.

It should be appreciated that the turbine engine 10 depicted in FIG. 1 is by way of example only. In other examples, the turbine engine 10 may have other configurations. For example, in other examples, the turbine engine 10 may include additional components (e.g., any other suitable number of shafts or spools), and/or may exclude depicted components (e.g., fan 40). Accordingly, it will be appreciated that in other examples, the turbine engine 10 may be configured as various suitable turbomachines, e.g., a turbojet engine, a turboshaft engine, a turboprop engine, etc., and further may be configured as an aeroderivative gas turbine engine or industrial gas turbine engine.

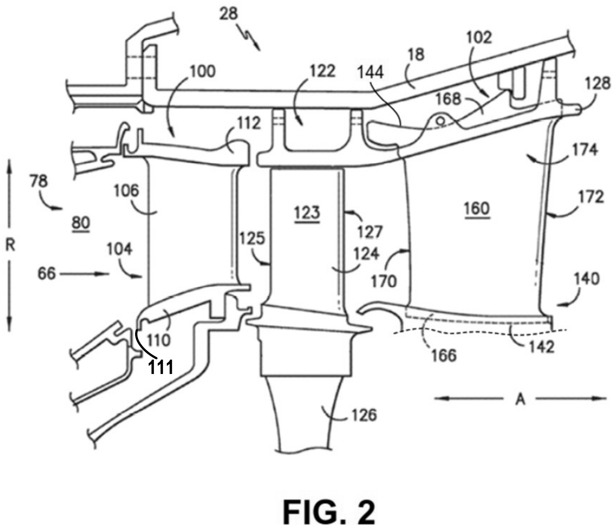

Referring now to FIG. 2, a schematic view is provided of the HP turbine 28 of the turbine section of core turbine engine 16, which is located downstream from combustion section 26. The combustion section 26 generally includes a combustor defining a combustion chamber 80. A mixture of fuel and air is combusted within the combustion chamber 80 to generate a flow of combustion gases (combustion gases 66 of FIG. 1) therethrough. Downstream of the combustion section 26, the HP turbine 28 includes a plurality of turbine component stages. Each turbine component stage includes a plurality of turbine components that define and/or are positioned within the hot gas path 78 through which the combustion gases flow.

More particularly, for the example depicted in FIG. 2, HP turbine 28 includes a plurality of turbine nozzle stages, as well as one or more stages of turbine rotor blades. Specifically, the HP turbine 28 includes a first stage turbine nozzle 100 and a second stage turbine nozzle 102, each configured to direct a flow of combustion gases 66 therethrough.

The first stage turbine nozzle 100 is located immediately downstream from the combustion section 26, and, thus, may also be referred to as a combustor discharge nozzle stage. The first stage turbine nozzle 100 includes a plurality of first stage turbine nozzle vanes 104 (e.g., combustion discharge nozzle vanes) spaced along the circumferential direction C. Each first stage turbine nozzle vane 104 includes a first stage airfoil 106 positioned within the hot gas path 78. The first stage airfoils 106 of the respective first stage turbine nozzle vanes 104 direct flow of hot combustion gases 66 from the combustion section 26 to the HP turbine 28.

Located immediately downstream of the first stage turbine nozzle 100 and immediately upstream of the second stage turbine nozzle 102, the HP turbine 28 includes a first stage 122 of turbine rotor blades 124 and a first stage rotor 126. Each turbine rotor blade 124 has an airfoil 123 extending axially between a leading edge 125 and a trailing edge 127. Further, each turbine rotor blade 124 is attached to the first stage rotor 126. The first stage turbine rotor 126 is, in turn, connected to the HP shaft 34 (see FIG. 1). As such, the turbine rotor blades 124 are configured to extract kinetic energy from the flow of combustion gases 66 through the hot gas path 78 defined by the HP turbine 28 as rotational energy applied to the HP shaft 34.

The first stage turbine nozzle 100 includes a plurality of turbine nozzle vanes, organized in pairs as nozzle segments, spaced along the circumferential direction C and positioned within the hot gas path. Each first stage turbine nozzle vane 104 includes an inner band segment 110 defining an inner wall of the first stage turbine nozzle vane 104 and an outer band segment 112 defining an outer wall of the first stage turbine nozzle vane 104. The inner band segment 110 has an inner band radius (IBR) 111. The first stage airfoil 106 of the first stage turbine nozzle vane 104 extend generally along the radial direction R from the inner band segment 110 to the outer band segment 112. Together, the plurality of first stage turbine nozzle vanes 104 define the first stage turbine nozzle 100.

The first stage turbine nozzle 100 includes a plurality of turbine nozzle vanes 104 spaced along the circumferential direction C and positioned within the hot gas path 78. Each nozzle vane 104 includes an inner band segment 110 defining an inner wall of the turbine nozzle vane 104, an outer band segment 112 defining an outer wall of the turbine nozzle vane 104, and a vane airfoil 106 (or airfoil portion) of the turbine nozzle vane 104. Each vane airfoil 106 has a leading edge 170, a trailing edge 172, and outer walls 174 that extend therebetween. The leading edge 170 is forward (with respect to the longitudinal axis) or upstream (with respect to flow across the airfoil) of trailing edge 172. Each vane airfoil 106 further includes a radially inner nozzle end 166 proximate the inner band segment 110 and that is a first distance from the longitudinal axis, and a radially outer nozzle end 168 proximate the outer band segment 112 and that is a second distance from the longitudinal axis that is greater than the first distance.

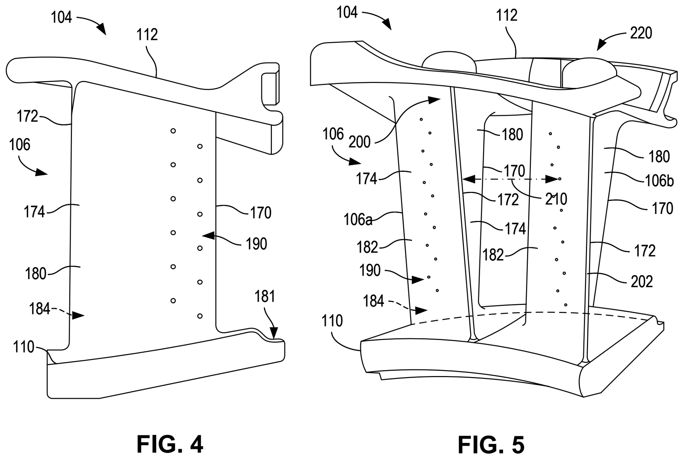

FIGS. 4 and 5 show views of an individual nozzle vane 104. The nozzle vane 104 includes one or more vane airfoils 106. As shown in FIG. 5, the nozzle vane 104 is also part of a nozzle segment including two vane airfoils 106 in the form of a leading vane airfoil 106a and a trailing vane airfoil 106b, although the teachings described herein are applicable to a nozzle vane 104 having a single vane airfoil 106 or three or more vane airfoils 106. A throat 210 is a width or distance between the trailing edge 172 of the airfoil 106a and a nearest point on the surface 182 of the adjacent airfoil 106b facing the first airfoil 106a, measured as in FIG. 5, which shows the airfoils 106a and 106b as they would be mounted together in an installed condition.

As described, the vane airfoils 106 define a leading edge 170 and an opposite trailing edge 172. The outer walls 174 of a vane airfoil 106 include a pressure side 180 and a suction side 182 opposite the pressure side 180. Each of the pressure side 180 and suction side 182 is defined between the leading edge 170 and the trailing edge 172. The pressure side 180 and the suction side 182 define a cross-sectional chord-wise airfoil shape. As shown, the pressure side 180 is generally concave, and the suction side 182 is generally convex. As discussed in greater detail below, the outer walls 174 of the vane airfoil 106 form an internal cavity 184 that is sized to receive a baffle insert 220 therein.

One or both of the pressure side 180 and the suction side 182 may include a plurality of cooling apertures 190, 200. Hot combustion gas 66 exits the combustor section 26 and impinges upon the airfoil 106. The hot combustion gas 66 is mixed with cooling air passing through the nozzle 100. The cooling air passes outwardly through the cooling apertures 190 in the vane airfoil 106 to form a thermal barrier of relatively cool air around the vane airfoil 106 (also called a cooling film).

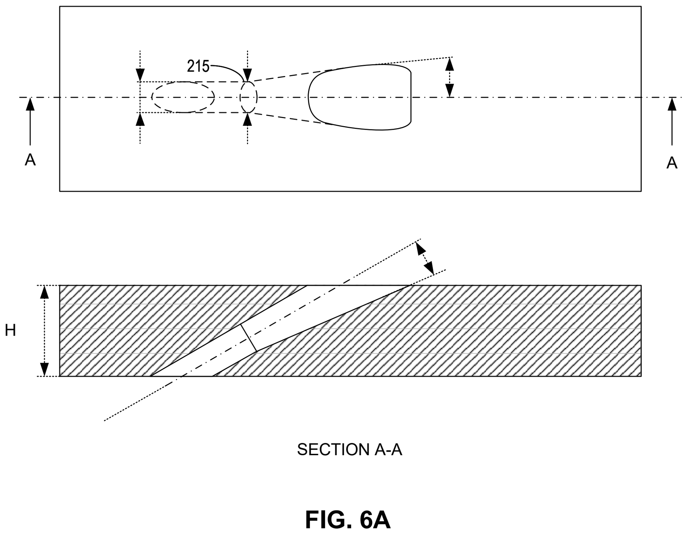

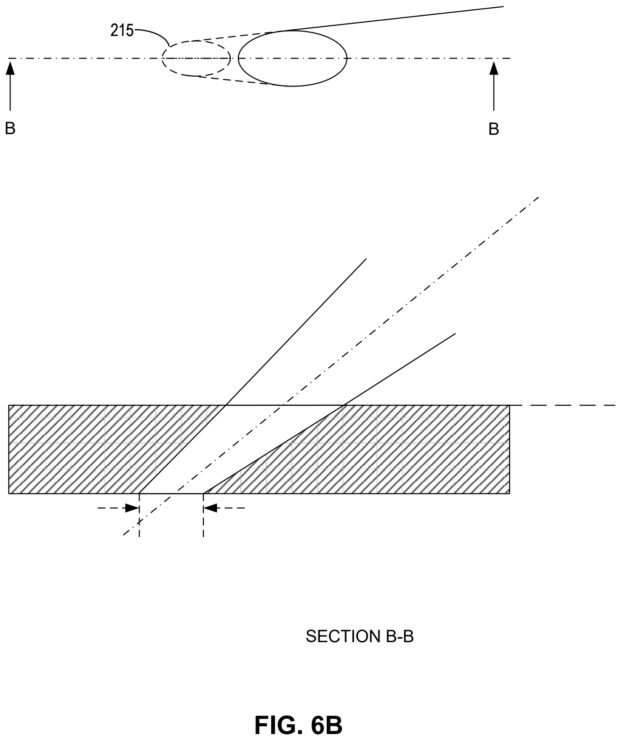

Metering or cooling holes/apertures have a generally circular or conical shape, although the opening can vary along a depth between an inlet and an outlet of the aperture. Hole shape can also be slotted, rectangular, or racetrack, for example. A diameter of the hole can be constant, or the diameter of the hole can vary between outlet and inlet to adjust the flow of air through the hole. In the example of FIG. 6A, a 7-7-7 metering hole shape is illustrated. The 7-7-7 metering hole arrangement indicates that both sides of the opening have a 7 degree side angle, and a 7 degree forward angle. The example of FIG. 6A illustrates that the diameter of the hole can change as it moves from inlet to outlet through the surface of the airfoil or baffle. FIG. 6B illustrates another varying example.

The metering holes each have an individual hole metering area ($A_H$), calculated from a smallest diameter in the hole channel as shown by a metering feature 215 in FIGS. 6A-B. Hole metering area can be calculated as follows:

$$A_H = (Hole\ Metering\ Area) = \pi * \left(\frac{D_{min}}{2}\right)^2,$$

where minimum diameter $D_{min}$ of the metering hole is calculated as the minimum hydraulic diameter 215 of the hole throughout its length.

A given surface has a number of holes (H) and, collectively, the holes have a total metering area for a particular surface of an airfoil (e.g., a percent span of the airfoil). For example, for a given percent span of an airfoil, the total metering area can be calculated as follows:

$$Metering\ area\ for\ \%\ span = \sum A_1 + A_2 + A_3 + \ ... + A_H.$$

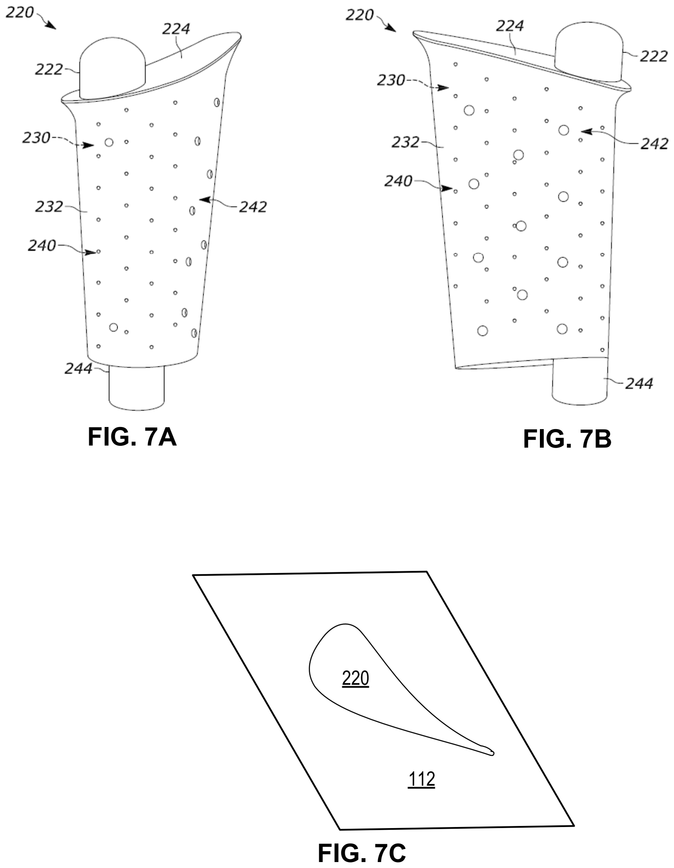

Referring now to FIGS. 7A and 7B, a baffle insert 220, which may be referred to as an impingement baffle, is shown. The baffle insert 220 is sized to fit in the internal cavity 184 of the vane airfoil 106, 160 of the nozzle segment 104, 140. The baffle insert 220 includes a cooling air inlet 222 in an upper wall 224 of the baffle insert 220. The cooling air inlet 222 receives cooling air and directs the cooling air into an internal cavity 230 defined by upper wall 224 and the baffle wall 232 of the baffle insert 220.

Cooling air is then expelled through cooling holes 240 formed in the baffle walls 232 and into the internal cavity 184 of the vane airfoil 160. The cooling air in the internal cavity 184 cools the outer walls 174 of the vane airfoil 160.

As described above, the cooling holes 240 each have an individual cooling hole area. There is a number (H) of cooling holes 240 and, collectively, the H cooling holes have a total cooling hole area (CHA). The cooling holes 240 may be circular cooling holes, slotted cooling holes, or other suitable geometry.

The baffle insert 220 may further include one or more features 242 on the baffle walls 232 to space the baffle walls 232 from the outer walls 174 of the vane airfoil 160. The features 242 facilitate airflow through the cooling holes 240 to the internal cavity 184 and outer walls 174. In the example shown, the features 242 are projections. The projections may be formed with the baffle insert 220 (e.g., in the form of dimples), or may be added to the baffle insert 220 after construction (e.g., in the form of stand-off pads). Excess cooling air not expelled through the cooling holes 240 may then be forced or drawn out of an outlet 244 of the baffle insert 220. FIG. 7C illustrates how the baffle insert 220 can fit in the internal cavity 184 of the airfoil 106, 160 (e.g., through the outer band segment 112).

It is to be appreciated that turbine nozzles are subjected to harsh environmental conditions that result in degradation of the nozzle segments. Vane airfoils of the nozzle are exposed to environmental factors including exhaust gas temperature (EGT), temperature changes, particles, etc., during operation of the gas turbine engine (e.g., at core speed, etc.). These environmental factors accelerate deterioration of the vane airfoils of the nozzle.

Cooling holes are openings in the surface of an airfoil to allow air to flow through the airfoil and create a protective boundary layer or film of cooler air on the external surface of the airfoil. The cooling air provided through the cooling holes reduces stress on the airfoils of the nozzle. However, the effect of the environment on vane airfoil design is not predictable. In particular, cracking was discovered at particular nozzle vane locations of previous nozzle vane designs after a lower number of cycles when exposed to an environment described at EGT.

Accelerated deterioration, including cracking, of the vane airfoils leads to maintenance, resulting in time off-wing of the gas turbine engine, which makes the gas turbine engine unavailable for use. Additionally, failure can occur if the condition is not identified in a timely fashion for maintenance to occur. For example, cracking can appear in the convex panel, concave panel, and/or metering holes. Certain cracking becomes unserviceable, requiring replacement of the affected part.

A cooling hole area at selected portions of the airfoil determines a usable life or time until degradation/failure of the airfoil. If the airfoil is designed according to prior designs, earlier degradation/failure may occur. The inventors created example designs described below, which provide for longer life of the component. As also shown below, alternative designs did not provide the same durability and lifespan benefit. Certain vane designs developed by the inventors and shown in Examples 1-10 of Table 1 were found to improve the nozzle durability tied to a redistribution and optimization of cooling air provided to the particular vane locations (e.g., increase number of operating cycles).

In order to improve the durability of airfoils, and particularly nozzle segment airfoils, to cracking and other degradation, the inventors of the present disclosure sought out to design a nozzle segment with a different configuration of holes to change fluid (air) flow and boundary layer formation to reduce degradation of the airfoil. The inventors, after constructing and running several gas turbine engines with different nozzle systems, as described above, developed a set of embodiments having beneficial cooling arrangements to improve durability of the airfoil.

Particularly, the inventors proceeded in the manner of designing nozzles for gas turbine engines with particular dimensions (e.g., metering hole area and coverage percentage) and characteristics (e.g., number of holes). The inventors redesigned the nozzle segments of the S1N to reduce degradation effects and improve operability and lifespan of the gas turbine engine and associated nozzle(s).

During the process of studying and evaluating various dimensional characteristics of their nozzle designs, the inventors determined that metering hole area and position on the airfoil unexpectedly impact airfoil degradation. As shown below, too much airfoil area including metering holes or too little airfoil area including metering holes do not provide the desired reduction in degradation (e.g., percentage increase in cycles).

As shown and described below, the inventors' nozzle designs reduce degradation, improve cooling performance, and decrease maintenance time off wing. The inventive design space developed by the inventors provides certain dimensions for percentage of airfoil span with metering holes and area of metering holes on the nozzle airfoil. The particular arrangement of metering holes enables longer lifespan of the nozzle, greater availability of the gas turbine engine, and more reliable operation of the aircraft. This development is described in greater detail below. It will be appreciated that the nozzle designs can be used with a variety of gas turbine engines, such as the turbine engine 10 described above, having a combustion section and one or more turbine sections (e.g., HP, LP, intermediate, etc.).

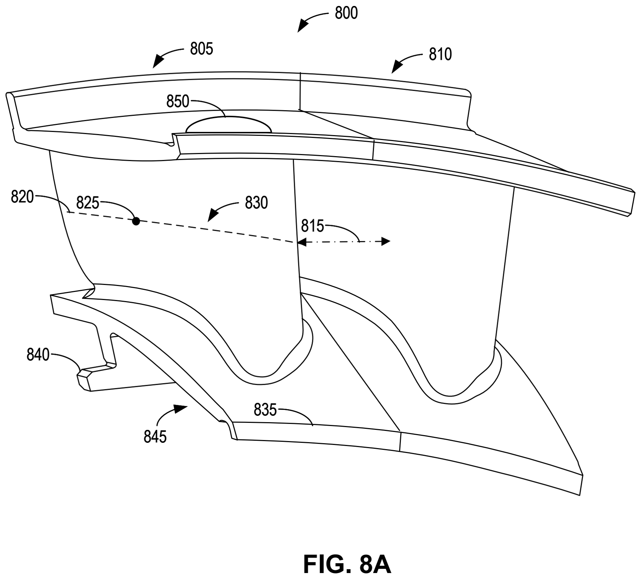

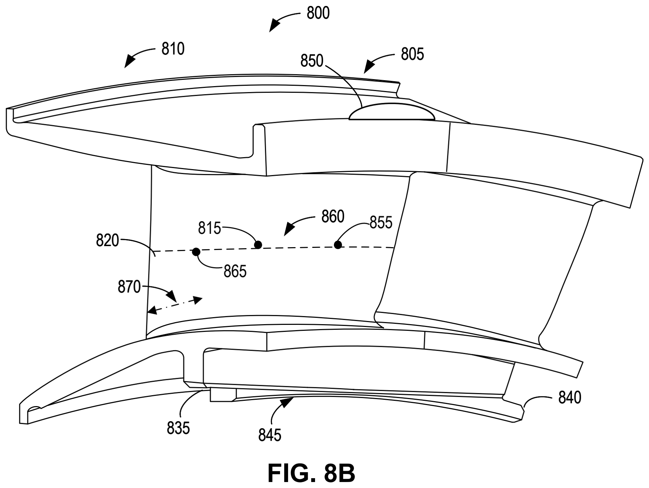

FIGS. 8A-8B illustrate views of an example nozzle segment 800. FIG. 8A is a concave view of an example nozzle segment 800, and FIG. 8B is a convex view of the example nozzle segment 800. As shown in the example of FIG. 8A, a pair of nozzle vanes 805, 810 are connected to form the nozzle segment 800. A throat 815 is formed between the nozzle vanes, and a span line 820 forms a plane at the throat 815 on the vane 805. A point 825 indicates a CCA%, which delineates a CCVA 830 for metering holes. An inner band segment 835 has an IBR. The nozzle vane 805 also has a loading area 840 and an inner band (IB) flow area (IBFA) 845 underneath the inner band segment 835. The nozzle vane 805 also includes a BA hole area 850.

As shown in the example convex view of FIG. 8B, the span line 820 forms a plane at the throat 815. A point 855 indicates a CVX%, which delineates a CVXA 860 for metering holes. The example convex view of FIG. 8B further includes a MC%, 865 which delineates a MCA 870. The inner band segment 835, loading area 840, and IB flow area 845 are also visible in the view of FIG. 8B.

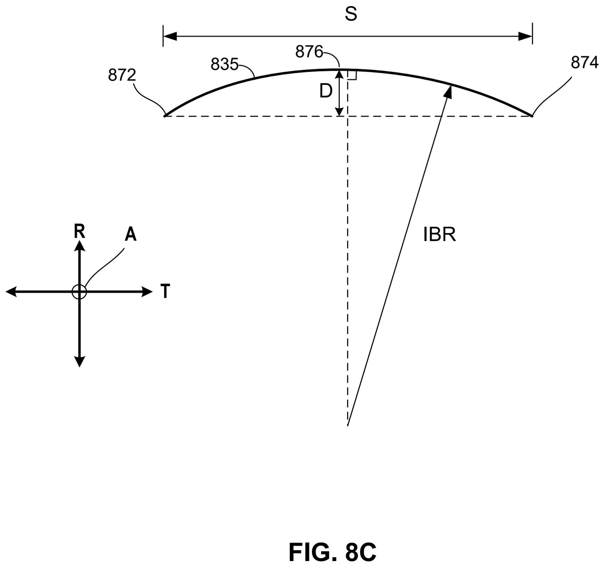

As shown in FIG. 8C, the IBR (i.e., the radius of curvature of the inner band segment 835) can be calculated using the straight-line distance (S) between the two the end points 872, 874, and the maximum deflection (D), in the radial R direction, between the two end points 872, 874 and the center point 876 of the arc. The IBR can be calculated using known methods. This calculation results in the same value when performed on two vanes or a single vane, for the purpose of this disclosure it is assumed to be performed across two vanes.

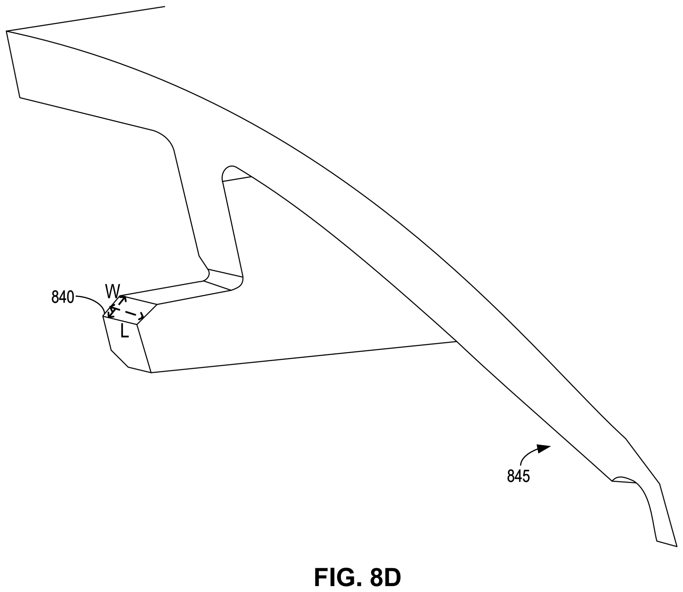

FIG. 8D shows the loading area 840 that protrudes from the vane 805 to enable the vanes to interlock or otherwise connect to form the nozzle segment 800. As shown in the example of FIG. 8D, the loading area can be calculated as a length times a width ($L \times W$) of the upper surface of the protrusion.

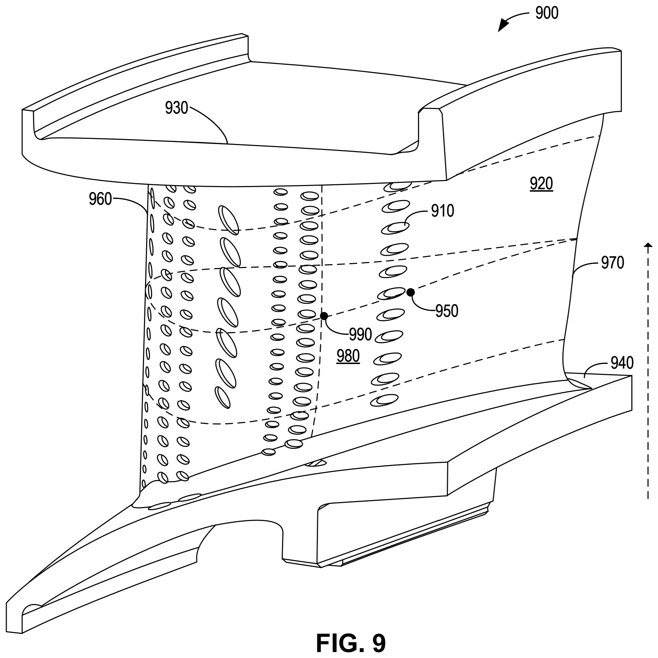

FIG. 9 illustrates one example configuration of a nozzle segment airfoil 900 design by the inventors. As shown in the example of FIG. 9, the airfoil 900 includes a plurality of metering holes 910 on a convex panel 920, which is positioned between an outer band 930 and an inner band 940 and forms a suction side of the airfoil 900. A leading edge 960, a trailing edge 970, and a throat 990 are shown. A percent span CVX% 950 (indicated by a dot in FIG. 9 that is shown for purposes of identification only) is from PS TE to SS TE around the airfoil 900. As shown in the example of FIG. 9, the CVX% 950 is defined at a location that is between 66.7% and 98.0% of the span from TE of the concave PS panel to TE of the convex SS panel of the airfoil 900, defining a CVXA 980 with respect to the throat 990 for metering hole 910 placement. Metering hole 910 size and count for placement in the CVXA 980 result in improved boundary layer formation over the convex panel 920 of the airfoil 900.

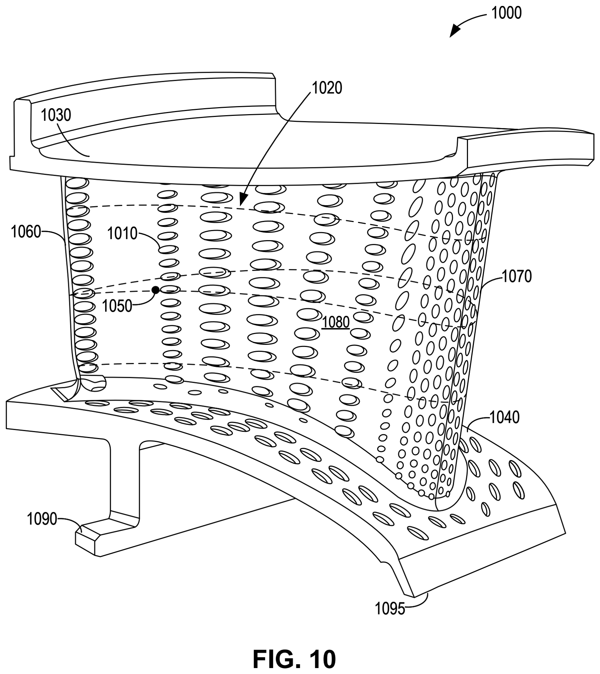

FIG. 10 illustrates one example configuration of a nozzle segment airfoil 1000 designed by the inventors. As shown in the example of FIG. 10, the airfoil 1000 includes a plurality of metering holes 1010 on a concave panel 1020, which is positioned between an outer band 1030 and an inner band 1040 and forms a pressure side of the airfoil 1000. A LE 1060 and a TE 1070 of the concave PS panel 1000 are shown. A percent span CCA% 1050 (indicated by a dot in FIG. 10 that is shown for purposes of identification only) is from PS TE to SS TE around the airfoil 1000. As shown in the example of FIG. 10, the CCVA% 1050 is defined at a location that is between 3.0% and 34.0% of the span between concave PS TE and the convex SS TE of the airfoil 1000, defining a CCVA 1080 for metering hole 1010 placement. Baffle insert (such as shown in FIGS. 7-8, positioned inside the airfoil 1000) is positioned inside the airfoil 1000 with metering holes to further guide flow. A loading area 1090 and an inner band segment 1095 are included. Metering hole 1010 size and count for placement in the CCVA 1080 results in improved boundary layer formation over the concave panel 1020 of the airfoil 1000.

In certain examples, the airfoil 1000 is the same as the airfoil 900 of the example of FIG. 9, and the convex panel 920 arrangement of metering holes 910 is combined with the concave panel 1020 arrangement of metering holes 1010 to improve flow and boundary layer formation.

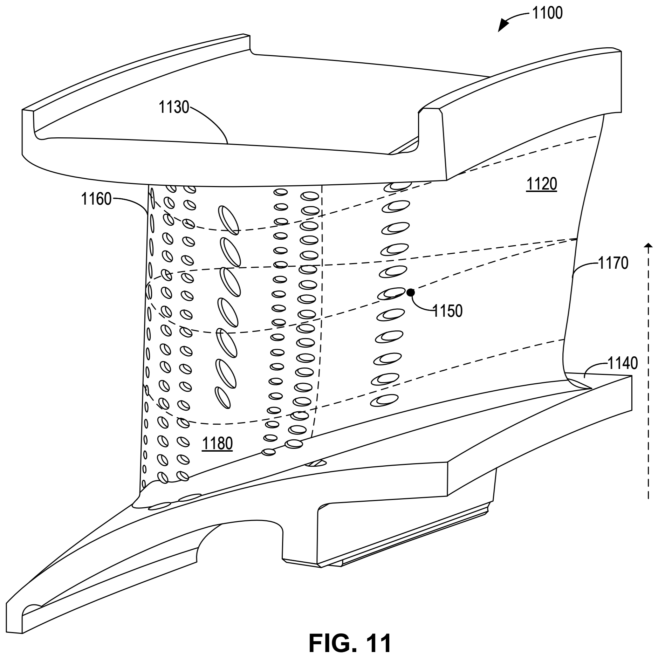

FIG. 11 illustrates one example configuration of a nozzle segment airfoil 1100 designed by the inventors. As shown in the example of FIG. 11, the airfoil 1100 includes a plurality of metering holes 1110 on a convex panel 1120, which is positioned between an outer band 1130 and an inner band 1140 and forms a suction side of the airfoil 1100. A LE 1160 and a TE 1170 are shown. A percent span MC% 1150 (indicated by a dot in FIG. 11 that is shown for purposes of identification only) is from PS TE to SS TE around the airfoil 1100. As shown in the example of FIG. 11, the MC% 1150 is defined at a location that is between 54.4% and 62.0% of the span between the TE of the concave PS panel and the TE of the convex SS panel of the airfoil 1100, defining a MCA 1180 for metering hole 1110 placement. Metering hole 1110 size and count for placement in the MCA 1180 result in improved boundary layer formation over the airfoil 1100.

In certain examples, the airfoil 1100 is the same as the airfoil 900 of the example of FIG. 9 and/or the airfoil 1000 of the example of FIG. 10, and the arrangement of metering holes 1110 is combined with the convex panel 920 arrangement of metering holes 910 and/or the concave panel 1020 arrangement of metering holes 1010 to improve flow and boundary layer formation.

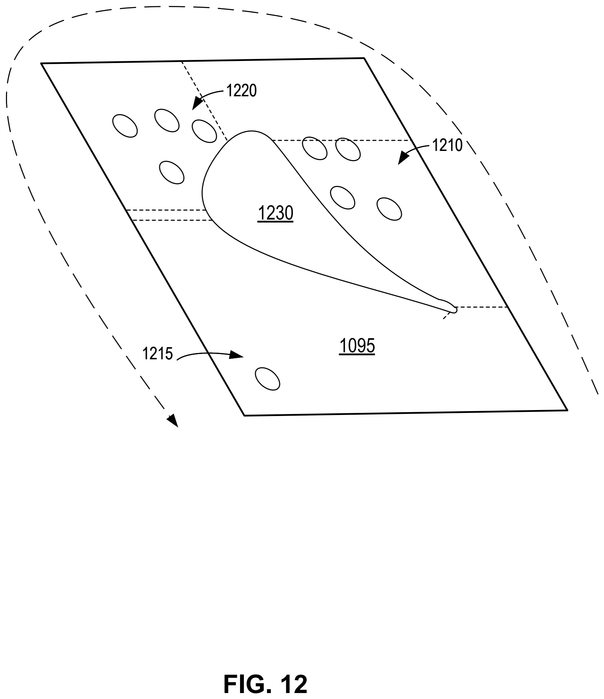

FIG. 12 illustrates an example inner band 1095 having one or more flow areas or zones 1210, 1215, 1220, 1225 and, optionally, a baffle insert 1230. As shown in the example of FIG. 12, a first zone 1210 is associated with the CCA% (e.g., 7.5% to 33.4%%) described above. A second zone 1215 is associated with the MC% (e.g., 54.4-62%) described above. A third zone 1220 is associated with the CVX% (e.g., 66.7-98%) described above. A fourth zone 1225 is associated with the IBFA described above. The inner band flow area 1225 and/or baffle insert hole area 1230 can be adjusted to affect boundary layer formation and cooling air flow. The direction of measurement along the span line extending around the airfoil from PS TE to SS TE is represented in FIG. 12 by an arrow 1240.

Through designing several engines and associated nozzles, the inventors of the present disclosure discovered nozzle designs that improve airfoil durability in the face of environmental factors. Metering holes can be added, removed, and/or rearranged on portions of a nozzle airfoil to provide a more uniform (i.e., less pronounced) thermal gradient on the nozzle in operation. The solutions identified by the inventors above were leveraged into a number of successful embodiments that provide improved durability to the convex panel of the nozzle by arranging metering holes on a particular area of the convex panel of the nozzle.

These embodiments are characterized by CVXA aft of the throat, IBR, and loading area (LA) for the S1N. The embodiments are shown in Table 1.

Table 1

| Parameter Name | CVXA | IBR | LA |
| --- | --- | --- | --- |
| Parameter Units | $m^2$ | m | $m^2$ |
| Example 1 | 0.221 | 0.0000153 | 0.0000001 |
| Example 2 | 0.213 | 0.0000147 | 0.0000040 |
| Example 3 | 0.220 | 0.0000148 | 0.0000021 |
| Example 4 | 0.219 | 0.0000151 | 0.0000027 |
| Example 5 | 0.221 | 0.0000150 | 0.0000038 |
| Example 6 | 0.213 | 0.0000152 | 0.0000023 |
| Example 7 | 0.214 | 0.0000147 | 0.0000007 |
| Example 8 | 0.216 | 0.0000153 | 0.0000036 |
| Example 9 | 0.220 | 0.0000151 | 0.0000001 |
| Example 10 | 0.220 | 0.0000151 | 0.0000001 |
|  |  |  |  |
| Example 11 | 0.221 | 0.0000151 | 0.00000000 |
| Example 12 | 0.215 | 0.0000147 | 0.00000005 |
| Example 13 | 0.218 | 0.0000130 | 0.00000003 |
| Example 14 | 0.213 | 0.0000153 | 0.00000001 |

As shown in Table 1, the inventors created various designs (Examples 1-10) with different configurations having the above described benefits. These designs form an inventive design space that improves engine durability, which can be distinguished from other designs that do not provide the same benefits to the engine. The inventive design space can be characterized according to the following Equation 1:

$$EQ1 = \left[ \frac{\left( \frac{CVXA\ (m^2)}{0.000005\ m^2} + 0.000005 \right)}{\left( \frac{IBR\ (m)}{\pi\ (m)} \right) \left( \frac{LA\ (m^2)}{0.00001 m^2} \right)} \right]$$

.

Other designs, such as the designs of Examples 11-14, did not provide the same benefits and cannot be characterized in the same terms with Equation 1.

As shown in Table 2, the example designs can be characterized according to Equation 1.

Table 2

| Parameter Name | CVXA | IBR | LA | Equation 1 |
|---|---|---|---|---|
| Parameter Units | m$^2$ | m | m$^2$ | dimensionless |
| Example 1 | 0.221 | 0.0000153 | 0.0000001 | 0.186 |
| Example 2 | 0.213 | 0.0000147 | 0.0000040 | 8.027 |
| Example 3 | 0.220 | 0.0000148 | 0.0000021 | 4.014 |
| Example 4 | 0.219 | 0.0000151 | 0.0000027 | 5.206 |
| Example 5 | 0.221 | 0.0000150 | 0.0000038 | 7.240 |
| Example 6 | 0.213 | 0.0000152 | 0.0000023 | 4.522 |
| Example 7 | 0.214 | 0.0000147 | 0.0000007 | 1.382 |
| Example 8 | 0.216 | 0.0000153 | 0.0000036 | 6.921 |
| Example 9 | 0.220 | 0.0000151 | 0.0000001 | 0.189 |
| Example 10 | 0.215 | 0.0000147 | 0.0000040 | 7.952 |
| | | | | |
| Example 11 | 0.221 | 0.0000151 | 0.00000000 | 0.000 |
| Example 12 | 0.215 | 0.0000147 | 0.00000005 | 0.099 |
| Example 13 | 0.218 | 0.0000130 | 0.00000003 | 0.067 |
| Example 14 | 0.213 | 0.0000153 | 0.00000001 | 0.019 |

In order to satisfy the equation and fit within the design space created by the inventors, the parameters for a particular engine design must be within certain ranges. Implementations outside the ranges fail to satisfy the identified relationships and fail to provide the benefits of the inventive example embodiments disclosed and described herein. Ranges for the parameters of Equation 1 are shown in Table 3.

Table 3

| Parameter Name | Parameter Units | Minimum | Maximum |
|---|---|---|---|
| CVXA | m$^2$ | 0.0000001 | 0.000004 |
| CVX% | percent (%) | 66.7 | 98.0 |
| IBR | M | 0.213 | 0.221 |
| LA | m$^2$ | 0.0000147 | 0.0000153 |
| Equation 1 | Unitless | 0.186 | 8.027 |

As such, when kept within a particular range, Equation 1 characterizes certain designs developed by the inventors with improved durability. Designs that fall outside the particular range of Equation 1 do not provide the same durability benefit.

From the foregoing, it will be appreciated that disclosed relationships enable manufacture of engine nozzles including nozzle segments with airfoils having improved durability and operability to withstand environmental factors including cracking, oxidation, and other degradation. Arrangements of metering hole count, position, and area disclosed and described above enable an inventive design space of embodiments not previously discovered and having a unique, inventive relationship to offset flow removal and/or increase convex flow beyond prior nozzle designs.

Further aspects are provided by the subject matter of the following clauses:

An example airfoil of an engine nozzle segment includes: a convex panel; a concave panel; an outer band; and an inner band. The convex panel includes a plurality of metering holes, and the airfoil is characterized by the following equation, in which a convex panel metering hole area (CVXA), inner band radius (IBR), and loading area (LA) are related as follows:

$$EQ1 = \left[ \frac{\left( \frac{CVXA\ (m^2)}{0.000005\ m^2} + 0.000005 \right)}{\left( \frac{IBR(m)}{\pi\ (m)} \right) \left( \frac{LA\ (m^2)}{0.00001m^2} \right)} \right] ,$$

wherein 0.0000001 meters squared (m²) ≤ CVXA ≤ 0.000004 m², 0.213 m ≤ IBR ≤ 0.221 m, 0.0000147 m² ≤ LA ≤ 0.0000153 m², and 4.835 ≤ Equation 1 ≤ 281.150.

The airfoil of any preceding clause, wherein the CVXA is measured as a percent of a span of the airfoil from a throat of the airfoil to a trailing edge of the airfoil, represented as CVX%.

The airfoil of any preceding clause, wherein the convex panel is a suction side panel and the concave panel is a pressure side panel, and wherein the CVXA is measured as a percent of the span from a trailing edge of the concave pressure side panel to the trailing edge of the convex suction side panel.

The airfoil of any preceding clause, wherein 66.7 % ≤ CVX% ≤ 98.0%.

The airfoil of any preceding clause, wherein the airfoil includes at least one of a rotor or a stator.

The airfoil of any preceding clause, wherein the metering holes include at least one of circular holes or conical holes.

The airfoil of any preceding clause, wherein the engine nozzle segment is a stage one nozzle segment.

The airfoil of any preceding clause, wherein the engine nozzle segment is positioned between a combustion section and a turbine section of a gas turbine engine.

An example nozzle of a gas turbine engine includes: a first nozzle segment; and a second nozzle segment. The first and second nozzle segments each include an airfoil having: a convex panel; a concave panel; an outer band; and an inner band. The concave panel includes a plurality of metering holes, and the airfoil is characterized by the following equation, in which a convex panel metering hole area (CVXA), inner band radius (IBR), and loading area (LA) are related as follows:

$$EQ1 = \left[ \frac{\left( \frac{CVXA\ (m^2)}{0.000005\ m^2} + 0.000005 \right)}{\left( \frac{IBR(m)}{\pi\ (m)} \right) \left( \frac{LA\ (m^2)}{0.00001m^2} \right)} \right] ,$$

wherein 0.0000001 meters squared (m²) ≤ CVXA ≤ 0.000004 m², 0.213 m ≤ IBR ≤ 0.221 m, 0.0000147 m² ≤ LA ≤ 0.0000153 m², and 4.835 ≤ Equation 1 ≤ 281.150.

The nozzle of any preceding clause, wherein the CVXA is measured as a percent of a span of the airfoil from a throat of the airfoil to a trailing edge of the airfoil, represented as CVX%.

The nozzle of any preceding clause, wherein the convex panel is a suction side panel and the concave panel is a pressure side panel, and wherein the CVXA is measured as a percent of the span from a trailing edge of the concave pressure side panel to the trailing edge of the convex suction side panel.

The nozzle of any preceding clause, wherein 66.7 % ≤ CVX% ≤ 98.0%.

The nozzle of any preceding clause, wherein the airfoil includes at least one of a rotor or a stator.

The nozzle of any preceding clause, wherein the metering holes include at least one of circular holes or conical holes.

An example gas turbine engine includes: a combustion section; a turbine section; a nozzle disposed between the combustion section and the turbine section. The nozzle includes a plurality of nozzle segments. At least one of the plurality of nozzle segments includes an airfoil having: a convex panel; a concave panel; an outer band; and an inner band. The convex panel includes a plurality of metering holes, and the airfoil is characterized by the following equation, in which a convex panel metering hole area (CVXA), inner band radius (IBR), and loading area (LA) are related as follows:

$$EQ1 = \left[ \frac{\left( \frac{CVXA\,(m^2)}{0.000005\,m^2} + 0.000005 \right)}{\left( \frac{IBR(m)}{\pi\,(m)} \right) \left( \frac{LA\,(m^2)}{0.00001 m^2} \right)} \right],$$

wherein 0.0000001 meters squared ($m^2$) ≤ CVXA ≤ 0.000004 $m^2$, 0.213 m ≤ IBR ≤ 0.221 m, 0.0000147 $m^2$ ≤ LA ≤ 0.0000153 $m^2$, and 4.835 ≤ Equation 1 ≤ 281.150.

The gas turbine engine of any preceding clause, wherein the CVXA is measured as a percent of a span of the airfoil from a throat of the airfoil to a trailing edge of the airfoil, represented as CVX%.

The gas turbine engine of any preceding clause, wherein the convex panel is a suction side panel and the concave panel is a pressure side panel, and wherein the CVXA is measured as a percent of the span from a trailing edge of the concave pressure side panel to the trailing edge of the convex suction side panel.

The gas turbine engine of any preceding clause, wherein 66.7 % ≤ CVX% ≤ 98.0%.

An airfoil of an engine nozzle segment, the airfoil comprising: a convex panel; a concave panel; an outer band; and an inner band, the convex panel including a plurality of metering holes, the airfoil characterized by the following equation, in which a convex panel metering hole area (CVXA), inner band radius (IBR), and loading area (LA) are related

as follows: $EQ1 = \left[ \frac{\left( \frac{CVXA\,(m^2)}{0.000005\,m^2} + 0.000005 \right)}{\left( \frac{IBR\,(m)}{\pi\,(m)} \right) \left( \frac{LA\,(m^2)}{0.00001 m^2} \right)} \right]$, wherein 0.0000001 meters squared ($m^2$) ≤ CVXA ≤ 0.000004

$m^2$, 0.213 m ≤ IBR ≤ 0.221 m, 0.0000147 $m^2$ ≤ LA ≤ 0.0000153 $m^2$, and 4.835 ≤ Equation 1 ≤ 281.150, wherein the convex panel is a suction side panel and the concave panel is a pressure side panel, and wherein the CVXA is measured as a percent of a span of the airfoil at a throat from a trailing edge of the concave pressure side panel to the trailing edge of the convex suction side panel, represented as CVX%, wherein 66.7 % ≤ CVX% ≤ 98.0%.

The airfoil of any preceding clause, wherein the metering holes include at least one of circular holes or conical holes.

The airfoil of any preceding clause, wherein the engine nozzle segment is a stage one nozzle segment.

The airfoil of any preceding clause, wherein the engine nozzle segment is positioned between a combustion section and a turbine section of a gas turbine engine.

The airfoil of any preceding clause, wherein an area of a metering hole in the plurality of metering holes is determined based on a minimum hydraulic diameter of the metering hole through a length of the metering hole, and wherein a total metering area for the plurality of metering holes is a sum of the metering hole areas of the plurality of metering holes.

The airfoil of any preceding clause, wherein the plurality of metering holes is a first plurality of metering holes and the percent is a first percent, and wherein the concave panel includes a concave panel metering hole area (CCVA) measured as a second percent of the span of the airfoil and including a second plurality of metering holes.

The airfoil of any preceding clause, wherein the plurality of metering holes is a first plurality of metering holes and the percent is a first percent, and wherein the concave panel further includes an area of maximum curvature (MC) measured as a second percent of the span of the airfoil and including a second plurality of metering holes.

The airfoil of any preceding clause, wherein the plurality of metering holes is a first plurality of metering holes, and wherein the inner band includes an inner band flow area (IBFA) including a second plurality of metering holes.

A nozzle of a gas turbine engine comprising: a first nozzle segment; and a second nozzle segment, the first and second nozzle segments each including an airfoil having: a convex panel; a concave panel; an outer band; and an inner band, the concave panel including a plurality of metering holes, the airfoil characterized by the following equation, in which a convex panel metering hole area (CVXA), inner band radius (IBR), and loading area (LA) are related as follows:

$$EQ1 = \left[ \frac{\left( \frac{CVXA\ (m^2)}{0.000005\ m^2} + 0.000005 \right)}{\left( \frac{IBR\ (m)}{\pi\ (m)} \right) \left( \frac{LA\ (m^2)}{0.00001 m^2} \right)} \right],$$

wherein 0.0000001 meters squared (m²) ≤ CVXA ≤ 0.000004 m², 0.213 m ≤ IBR ≤ 0.221 m, 0.0000147 m² ≤ LA ≤ 0.0000153 m², and 4.835 ≤ Equation 1 ≤ 281.150, wherein the convex panel is a suction side panel and the concave panel is a pressure side panel, and wherein the CVXA is measured as a percent of a span of the airfoil at a throat from a trailing edge of the concave pressure side panel to the trailing edge of the convex suction side panel, represented as CVX%, wherein 66.7 % ≤ CVX% ≤ 98.0%.

The nozzle of any preceding clause, wherein the metering holes include at least one of circular holes or conical holes.

The nozzle of any preceding clause, wherein the first and second nozzle segments are stage one nozzle segments.

The nozzle of any preceding clause, wherein the first and second nozzle segments are positioned between a combustion section and a turbine section of a gas turbine engine.

The nozzle of any preceding clause, wherein an area of a metering hole in the plurality of metering holes is determined based on a minimum hydraulic diameter of the metering hole through a length of the metering hole, and wherein a total metering area for the plurality of metering holes is a sum of the metering hole areas of the plurality of metering holes.

The nozzle of any preceding clause, wherein the plurality of metering holes is a first plurality of metering holes and the percent is a first percent, and wherein the concave panel includes a concave panel metering hole area (CCVA) measured as a second percent of the span of the airfoil and including a second plurality of metering holes.

A gas turbine engine comprising: a combustion section; a turbine section; a nozzle disposed between the combustion section and the turbine section, the nozzle including a plurality of nozzle segments, at least one the plurality of nozzle segments including an airfoil including: a convex panel; a concave panel; an outer band; and an inner band, the convex panel including a plurality of metering holes, the airfoil characterized by the following equation, in which a convex panel metering hole area (CVXA), inner band radius (IBR), and loading area (LA) are related as follows:

$$EQ1 = \left[ \frac{\left( \frac{CVXA\ (m^2)}{0.000005\ m^2} + 0.000005 \right)}{\left( \frac{IBR\ (m)}{\pi\ (m)} \right) \left( \frac{LA\ (m^2)}{0.00001 m^2} \right)} \right],$$

wherein 0.0000001 meters squared (m²) ≤ CVXA ≤ 0.000004 m², 0.213 m ≤ IBR ≤ 0.221 m, 0.0000147 m² ≤ LA ≤ 0.0000153 m², and 4.835 ≤ Equation 1 ≤ 281.150, wherein the convex panel is a suction side panel and the concave panel is a pressure side panel, and wherein the CVXA is measured as a percent of a span of the airfoil at a throat from a trailing edge of the concave pressure side panel to the trailing edge of the convex suction side panel, represented as CVX%, wherein 66.7 % ≤ CVX% ≤ 98.0%.

The gas turbine engine of any preceding clause, wherein the metering holes include at least one of circular holes or conical holes.

The gas turbine engine of any preceding clause, wherein the at least one of the plurality of nozzle segments is a stage one nozzle segment.

The gas turbine engine of any preceding clause, wherein the at least one of the plurality of nozzle segments is positioned between a combustion section and a turbine section of a gas turbine engine.

The gas turbine engine of any preceding clause, wherein an area of a metering hole in the plurality of metering holes is determined based on a minimum hydraulic diameter of the metering hole through a length of the metering hole, and wherein a total metering area for the plurality of metering holes is a sum of the metering hole areas of the plurality of metering holes.

The gas turbine engine of any preceding clause, wherein the plurality of metering holes is a first plurality of metering holes and the percent is a first percent, and wherein the concave panel includes a concave panel metering hole area (CCVA) measured as a second percent of the span of the airfoil and including a second plurality of metering holes.

An airfoil of an engine nozzle segment, the airfoil comprising: a convex panel; a concave panel; an outer band; and an inner band, the convex panel including a plurality of metering holes, the airfoil characterized by the following equation, in which a convex panel metering hole area (CVXA), inner band radius (IBR), and loading area (LA) are related as follows:

$$EQ1 = \left[ \frac{\left( \frac{CVXA\ (m^2)}{0.000005\ m^2} + 0.000005 \right)}{\left( \frac{IBR\ (m)}{\pi\ (m)} \right) \left( \frac{LA\ (m^2)}{0.00001 m^2} \right)} \right] ,$$

wherein 0.0000001 meters squared (m²) ≤ CVXA ≤ 0.000004 m², 0.213 m ≤ IBR ≤ 0.221 m, 0.0000147 m² ≤ LA ≤ 0.0000153 m², and 4.835 ≤ Equation 1 ≤ 281.150, wherein the convex panel is a suction side panel and the concave panel is a pressure side panel, and wherein the CVXA is measured as a percent of a span of the airfoil at a throat from a trailing edge of the concave pressure side panel to the trailing edge of the convex suction side panel, represented as CVX%, wherein 66.7 % ≤ CVX% ≤ 98.0%.

The airfoil of any preceding clause, wherein the metering holes include at least one of circular holes or conical holes.

The airfoil of any preceding clause, wherein the engine nozzle segment is a stage one nozzle segment.

The airfoil of any preceding clause, wherein the engine nozzle segment is positioned between a combustion section and a turbine section of a gas turbine engine.

The airfoil of any preceding clause, wherein an area of a metering hole in the plurality of metering holes is determined based on a minimum hydraulic diameter of the metering hole through a length of the metering hole, and wherein a total metering area for the plurality of metering holes is a sum of the metering hole areas of the plurality of metering holes.

The airfoil of any preceding clause, wherein the plurality of metering holes is a first plurality of metering holes and the percent is a first percent, and wherein the concave panel includes a concave panel metering hole area (CCVA) measured as a second percent of the span of the airfoil and including a second plurality of metering holes.

The airfoil of any preceding clause, wherein the plurality of metering holes is a first plurality of metering holes and the percent is a first percent, and wherein the concave panel further includes an area of maximum curvature (MC) measured as a second percent of the span of the airfoil and including a second plurality of metering holes.

The airfoil of any preceding clause, wherein the plurality of metering holes is a first plurality of metering holes, and wherein the inner band includes an inner band flow area (IBFA) including a second plurality of metering holes.

A nozzle of a gas turbine engine comprising: a first nozzle segment; and a second nozzle segment, the first and second nozzle segments each including an airfoil having: a convex panel; a concave panel; an outer band; and an inner band, the concave panel including a plurality of metering holes, the airfoil characterized by the following equation, in which a convex panel metering hole area (CVXA), inner band radius (IBR), and loading area (LA) are related as follows:

$$EQ1 = \left[ \frac{\left( \frac{CVXA\ (m^2)}{0.000005\ m^2} + 0.000005 \right)}{\left( \frac{IBR\ (m)}{\pi\ (m)} \right) \left( \frac{LA\ (m^2)}{0.00001 m^2} \right)} \right] ,$$

wherein 0.0000001 meters squared (m²) ≤ CVXA ≤ 0.000004 m², 0.213 m ≤ IBR ≤ 0.221 m, 0.0000147 m² ≤ LA ≤ 0.0000153 m², and 4.835 ≤ Equation 1 ≤ 281.150, wherein the convex panel is a suction side panel and the concave panel is a pressure side panel, and wherein the CVXA is measured as a percent of a span of the airfoil at a throat from a trailing edge of the concave pressure side panel to the trailing edge of the convex suction side panel, represented as CVX%, wherein 66.7 % ≤ CVX% ≤ 98.0%.

The nozzle of any preceding clause, wherein the metering holes include at least one of circular holes or conical holes.

The nozzle of any preceding clause, wherein the first and second nozzle segments are stage one nozzle segments.

The nozzle of any preceding clause, wherein the first and second nozzle segments are positioned between a combustion section and a turbine section of a gas turbine engine.

The nozzle of any preceding clause, wherein an area of a metering hole in the plurality of metering holes is determined based on a minimum hydraulic diameter of the metering hole through a length of the metering hole, and wherein a total metering area for the plurality of metering holes is a sum of the metering hole areas of the plurality of metering holes.

The nozzle of any preceding clause, wherein the plurality of metering holes is a first plurality of metering holes and the percent is a first percent, and wherein the concave panel includes a concave panel metering hole area (CCVA) measured as a second percent of the span of the airfoil and including a second plurality of metering holes.

A gas turbine engine comprising: a combustion section; a turbine section; a nozzle disposed between the combustion section and the turbine section, the nozzle including a plurality of nozzle segments, at least one the plurality of nozzle segments including an airfoil including: a convex panel; a concave panel; an outer band; and an inner band, the convex panel including a plurality of metering holes, the airfoil characterized by the following equation, in which a convex panel metering hole area (CVXA), inner band radius (IBR), and loading area (LA) are related as follows:

$$EQ1 = \left[ \frac{\left( \frac{CVXA\ (m^2)}{0.000005\ m^2} + 0.000005 \right)}{\left( \frac{IBR\ (m)}{\pi\ (m)} \right) \left( \frac{LA\ (m^2)}{0.00001 m^2} \right)} \right],$$

wherein 0.0000001 meters squared ($m^2$) $\leq$ CVXA $\leq$ 0.000004 $m^2$, 0.213 m $\leq$ IBR $\leq$ 0.221 m, 0.0000147 $m^2$ $\leq$ LA $\leq$ 0.0000153 $m^2$, and 4.835 $\leq$ Equation 1 $\leq$ 281.150, wherein the convex panel is a suction side panel and the concave panel is a pressure side panel, and wherein the CVXA is measured as a percent of a span of the airfoil at a throat from a trailing edge of the concave pressure side panel to the trailing edge of the convex suction side panel, represented as CVX%, wherein 66.7 % $\leq$ CVX% $\leq$ 98.0%.

The gas turbine engine of any preceding clause, wherein the metering holes include at least one of circular holes or conical holes.

The gas turbine engine of any preceding clause, wherein the at least one of the plurality of nozzle segments is a stage one nozzle segment.

The gas turbine engine of any preceding clause, wherein the at least one of the plurality of nozzle segments is positioned between a combustion section and a turbine section of a gas turbine engine.

The gas turbine engine of any preceding clause, wherein an area of a metering hole in the plurality of metering holes is determined based on a minimum hydraulic diameter of the metering hole through a length of the metering hole, and wherein a total metering area for the plurality of metering holes is a sum of the metering hole areas of the plurality of metering holes.

The gas turbine engine of any preceding clause, wherein the plurality of metering holes is a first plurality of metering holes and the percent is a first percent, and wherein the concave panel includes a concave panel metering hole area (CCVA) measured as a second percent of the span of the airfoil and including a second plurality of metering holes.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

**Claims**

1. An airfoil (123) of an engine nozzle segment (140, 800), the airfoil (123) comprising:

    a convex panel (920, 1120);
    a concave panel (1020);
    an outer band (930, 1030, 1130); and
    an inner band (940, 1040, 1140),
    the convex panel (920, 1120) including a plurality of metering holes (910, 1010, 1110),
    the airfoil (123) **characterized by** the following equation, in which a convex panel (920, 1120) metering hole area (1230) (CVXA (860, 980)), inner band (940, 1040, 1140) radius (IBR), and loading area (840, 1090) (LA) are related as follows:

$$EQ1 = \left[ \frac{\left( \frac{CVXA\ (m^2)}{0.000005\ m^2} + 0.000005 \right)}{\left( \frac{IBR\ (m)}{\pi\ (m)} \right)\left( \frac{LA\ (m^2)}{0.00001 m^2} \right)} \right] ,$$

wherein 0.0000001 meters squared ($m^2$) $\leq$ CVXA (860, 980) $\leq$ 0.000004 $m^2$, 0.213 m $\leq$ IBR $\leq$ 0.221 m, 0.0000147 $m^2$ $\leq$ LA $\leq$ 0.0000153 $m^2$, and 4.835 $\leq$ Equation 1 $\leq$ 281.150,

wherein the convex panel (920, 1120) is a suction side (182) panel and the concave panel (1020) is a pressure side (180) panel, and wherein the CVXA (860, 980) is measured as a percent of a span of the airfoil (123) at a throat (210, 815, 990) from a trailing edge (127, 970) (125, 170, 960) of the concave pressure side (180) panel to the trailing edge (127, 970) (125, 170, 960) of the convex suction side (182) panel, represented as CVX%, wherein 66.7 % $\leq$ CVX% $\leq$ 98.0%.

2. The airfoil (123) of claim 1, wherein the metering holes (910, 1010, 1110) include at least one of circular holes or conical holes.

3. The airfoil (123) of any preceding claim, wherein the engine nozzle segment (140, 800) is a stage one nozzle segment (140, 800).

4. The airfoil (123) of any preceding claim, wherein the engine nozzle segment (140, 800) is positioned between a combustion section (54) (26) and a turbine section (54) of a gas turbine engine (10).

5. The airfoil (123) of any preceding claim, wherein an area of a metering hole in the plurality of metering holes (910, 1010, 1110) is determined based on a minimum hydraulic diameter (215) of the metering hole through a length of the metering hole, and wherein a total metering area for the plurality of metering holes (910, 1010, 1110) is a sum of the metering hole areas of the plurality of metering holes (910, 1010, 1110).

6. The airfoil (123) of any preceding claim, wherein the plurality of metering holes (910, 1010, 1110) is a first plurality of metering holes and the percent is a first percent, and wherein the concave panel (1020) includes a concave panel (1020) metering hole area (1230) (CCVA (830, 1080)) measured as a second percent of the span of the airfoil (123) and including a second plurality of metering holes (910, 1010, 1110).

7. The airfoil (123) of any preceding claim, wherein the plurality of metering holes (910, 1010, 1110) is a first plurality of metering holes and the percent is a first percent, and wherein the concave panel (1020) further includes an area of maximum curvature (MC) measured as a second percent of the span of the airfoil (123) and including a second plurality of metering holes (910, 1010, 1110).

8. The airfoil (123) of any preceding claim, wherein the plurality of metering holes (910, 1010, 1110) is a first plurality of metering holes (910, 1010, 1110), and wherein the inner band (940, 1040, 1140) includes an inner band (940, 1040, 1140) flow area (IBFA) including a second plurality of metering holes (910, 1010, 1110).

9. A nozzle of a gas turbine engine (10) comprising:

a first nozzle segment (140, 800); and
a second nozzle segment (140, 800),
the first and second nozzle segments each including the airfoil (123) of any of claims 1-8.

10. A gas turbine engine (10) comprising:

a combustion section (54) (26);
a turbine section (54);
a nozzle disposed between the combustion section (54) (26) and the turbine section (54), the nozzle including a plurality of nozzle segments, at least one the plurality of nozzle segments including the airfoil (123) of any preceding claim.

**FIG. 1**

FIG. 2

FIG. 3

**FIG. 4**

**FIG. 5**

215

A
A
A
A

H

SECTION A-A

# FIG. 6A

215

B          B

SECTION B-B

FIG. 6B

**FIG. 7A**

**FIG. 7B**

**FIG. 7C**

**FIG. 8A**

**FIG. 8B**

**FIG. 8C**

**FIG. 8D**

FIG. 9

**FIG. 10**

**FIG. 11**

**FIG. 12**

Europäisches
Patentamt
European
Patent Office
Office européen
des brevets

# EUROPEAN SEARCH REPORT

**Application Number**

EP 25 21 8848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Easa: "TYPE-CERTIFICATE DATA SHEET No. E.115 for Engine LEAP-1B series engines", , 5 December 2022 (2022-12-05), pages 1-15, XP093375223, Retrieved from the Internet: URL:https://www.easa.europa.eu/en/document-library/type-certificates/engine-cs-e/easae115-leap-1b-series-engines#group-easa-downloads * the whole document * | 1-10 | INV. F01D5/18 F01D9/04 |
| Y | US 2016/201474 A1 (SLAVENS THOMAS N [US] ET AL) 14 July 2016 (2016-07-14) * page 3, paragraph 38 - page 3, paragraph 42; figures 2A,3 * | 1-10 | |
| Y | US 7 836 703 B2 (GEN ELECTRIC [US]) 23 November 2010 (2010-11-23) * column 6, line 35 - column 8, line 6; figures 2,3,4 * | 1-10 | |
| Y | US 8 205 458 B2 (LEE CHING-PANG [US]; ORLANDO ROBERT JOSEPH [US]; GEN ELECTRIC [US]) 26 June 2012 (2012-06-26) * column 5, line 54 - column 8, line 54; figures 2-4 * | 1-10 | **TECHNICAL FIELDS SEARCHED (IPC)** F01D |
| Y | TAKEISHI KENICHIRO: "Evolution of Turbine Cooled Vanes and Blades Applied for Large Industrial Gas Turbines and Its Trend toward Carbon Neutrality", ENERGIES, vol. 15, no. 23, 25 November 2022 (2022-11-25), page 8935, XP093378765, CH ISSN: 1996-1073, DOI: 10.3390/en15238935 * the whole document * | 1-10 | |

The present search report has been drawn up for all claims

| Place of search | Date of completion of the search | Examiner |
|---|---|---|
| Munich | 19 March 2026 | Rau, Guido |

EPO FORM 1503 03.82 (P4C01)

EP 4 749 089 A1

## ANNEX TO THE EUROPEAN SEARCH REPORT
## ON EUROPEAN PATENT APPLICATION NO.

EP 25 21 8848

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | | | Publication date | Patent family member(s) | | Publication date |
|---|---|---|---|---|---|---|
| US 2016201474 | A1 | | 14-07-2016 | EP | 3009599 A1 | 20-04-2016 |
| | | | | US | 2016201474 A1 | 14-07-2016 |
| US 7836703 | B2 | | 23-11-2010 | CA | 2633787 A1 | 20-12-2008 |
| | | | | CN | 101328814 A | 24-12-2008 |
| | | | | DE | 102008002890 A1 | 24-12-2008 |
| | | | | GB | 2450405 A | 24-12-2008 |
| | | | | JP | 5311892 B2 | 09-10-2013 |
| | | | | JP | 2009002340 A | 08-01-2009 |
| | | | | US | 2008317585 A1 | 25-12-2008 |
| US 8205458 | B2 | | 26-06-2012 | CA | 2647764 A1 | 30-06-2009 |
| | | | | DE | 102008055589 A1 | 02-07-2009 |
| | | | | GB | 2455899 A | 01-07-2009 |
| | | | | JP | 5356007 B2 | 04-12-2013 |
| | | | | JP | 2009162228 A | 23-07-2009 |
| | | | | US | 2010047056 A1 | 25-02-2010 |

EPO FORM P0459

For more details about this annex : see Official Journal of the European Patent Office, No. 12/82

**REFERENCES CITED IN THE DESCRIPTION**

**Patent documents cited in the description**

- US 63725184